# EUROPÄISCHE PATENTSCHRIFT

(11) **EP 1 388 200 B1**
(45) Veröffentlichungstag und Bekanntmachung des Hinweises auf die Patenterteilung: **18.07.2007**
(21) Anmeldenummer: 02735245.9
(22) Anmeldetag: 11.04.2002
(51) Int. Cl.: H02M 1/15, H02M 1/14

(54) **SCHALTUNGSANORDNUNG ZUR SPANNUNGSSTABILISIERUNG**
CIRCUIT ARRANGEMENT FOR VOLTAGE STABILISATION
MONTAGE DE STABILISATION DE TENSION

(30) Priorität: 17.05.2001 DE 10124114
(43) Veröffentlichungstag der Anmeldung: 11.02.2004
(73) Patentinhaber: Infineon Technologies AG, 81669 München (DE)
(72) Erfinder: KLOTZ, Frank, 81735 München (DE); PETZOLDT, Jürgen, 98893 Ilmenau (DE); RAFOTH, Axel, 18059 Rostock (DE)
(74) Vertreter: Bickel, Michael
(86) Internationale Anmeldenummer: PCT/EP2002/004055
(87) Internationale Veröffentlichungsnummer: WO 2002/093725

(56) Entgegenhaltungen:
- EP-A- 0 892 332
- DE-A- 19 741 430
- US-A- 4 541 288
- TIETZE, U.; SCHENK, CH.: "Halbleiterschaltungstechnik" 1980 , SPRINGER-VERLAG , BERLIN, HEIDELBERG, NEW YORK; 5. AUFLAGE XP002207257 Seite 94; Abbildung 6.1

## Beschreibung

Die Erfindung betrifft eine Schaltungsanordnung zur Spannungsstabilisierung.

Für den Betrieb elektronischer Schaltungen sind im allgemeinen ein bzw. zwei Gleichspannungen erforderlich. Diese werden fast immer mittels Stromversorgungsschaltungen direkt aus der Netzwechselspannung gewonnen. Diese Stromversorgungsschaltungen bestehen im einfachsten Fall aus einem Netztransformator, einem Gleichrichter und einer Siebschaltung. Jedoch werden heute innerhalb der Stromversorgungsschaltungen zunehmend Schaltnetzteile eingesetzt, um die Verluste der Stromversorgung, zu reduzieren. Für den Betrieb der elektronischen Schaltung ist es jedoch erforderlich, dass die durch die Stromversorgung bzw. das Schaltnetzteil gelieferte Gleichspannung einen benötigten Spannungswert möglichst genau einhält. Allerdings können bei getakteten Schaltungsanordnungen in der Leistungselektronik Spannungsschwankungen auf den Anschlussleitungen zwischen dem Netzanschluss und dem Lastanschluss entstehen. Diese Spannungsschwankungen werden durch Netzspannungsschwankungen, Temperaturschwankungen und Laststromschwankungen verursacht. Solche Spannungsschwankungen sind unerwünscht, da daraus erhöhte Funkentstörungen (EMV-Abstrahlung), eine erhöhte Verlustleistung, Anregung der Umgebung und Instabilitäten der gesamten Schaltungsanordnung resultieren.

Jedoch sollte trotz dieser Spannungsschwankungen die für den Betrieb der elektronischen Schaltung erforderliche Gleichspannung innerhalb einer gewissen Toleranz, beispielsweise zwischen 0,5 und 5 %, weitestgehend konstant sein. Aus diesen Gründen ist die Ausgangsspannung der innerhalb der Stromversorgungsschaltungen angeordneten Gleichrichterschaltungen nicht direkt als Betriebsspannung für eine elektronische Schaltung geeignet, sondern muss durch eine nachgeschaltete Schaltungsanordnung zur Spannungsstabilisierung stabilisiert und geglättet werden.

Im einfachsten Fall entsteht eine solche Spannungsstabilisierungsschaltung aus einem linearen Spannungsregler, der dem Netztransformator und dem Gleichrichter nachgeschaltet ist und der beispielsweise eine Siebschaltung ersetzen kann. Solche Spannungsregler unterdrücken die Eingangsspannungsschwankungen und regeln gegebenenfalls vorkommende Laststromschwankungen aus. Bei einem Schaltnetzteil verzichtet man bekanntlich auf den üblichen Netztransformator. Die Netzspannung wird hier unmittelbar gleichgerichtet und diese Gleichspannung mit einem Gleichspannungswandler bzw. einem Schaltregler auf die gewünschte Ausgangsspannung gebracht und stabilisiert.

Solche Schaltungen zur Spannungsrealisierung sind vielfach bekannt und beispielsweise in R. Köstner, A. Möschwitzer, "Elektronische Schaltungen", Karl-Hanser-Verlag, 1993, insbesondere auf den Seiten 264 bis 286, beschrieben.

Diese einfachen Schaltungen zur Spannungsstabilisierung, die durch einen Spannungsregler bzw. durch die Funktionalität des Schaltnetzteiles selbst realisiert werden, erfüllen die Anforderungen, die man an eine Schaltung zur Spannungsstabilisierung stellen muss, zum größten Teil nicht oder nicht gut genug. Deshalb findet man in getakteten Schaltungen der Leistungselektronik zusätzlich oder alternativ zu den Spannungsreglern häufig auch passive oder aktive Filter zur aktiven Kompensation der Spannungsschwankungen. Zwar kann insbesondere mit einer aktiven Filterung vielfach eine gute Spannungsstabilisierung erreicht werden, jedoch ist der Aufwand für einen solchen Spannungsstabilisator häufig derart groß, dass er aus wirtschaftlichen Gründen nicht realisiert wird.

Allen oben genannten Schaltungen zur Spannungsstabilisierung ist der Nachteil inhärent, dass sie zumindest teilweise direkt in der jeweiligen Ausgangsleitung, auf der ein zu kompensierender Störpegel verläuft, angeordnet sind, um so eine dynamische Ausregelung bzw. Kompensation des Störsignals zu gewährleisten. Die Stabilisierungsschaltung ist dadurch aber nicht mehr rückwirkungsfrei, da die im Lastpfad angeordneten Bauelemente der Schaltung zur Spannungsstabilisierung immer auch einen Einfluss auf das zu stabilisierende Signal haben.

DE 19741430 A1 offenbart eine Schaltungsanordnung und ein Verfahren zur Unterdrückung störender Rückwirkungen eines Umrichters.

In dem Artikel "Design and Evaluation of an Active Ripple Filter with Rogowski-Coil Current Sensing", von M. Zhu, et al, des Massachusetts Instituts of Technology, ist ein aktiver Filter zur Spannungsstabilisierung beschrieben, der diesen Nachteil nicht aufweist. Hier ist ein induktiver Messaufnehmer zur Erfassung des Störsignals vorgesehen, wobei aus dem Störsignal ein Kompensationssignal erzeugt wird, welches wieder induktiv eingespeist wird. Durch die galvanische Trennung der Schaltungsanordnung zur Spannungsstabilisierung von den entsprechenden Anschlussleitungen mit dem Störsignal wird eine direkte Ankopplung und somit eine direkte Rückwirkung der Schaltung zur Spannungsstabilisierung auf den Laststromkreis vermieden. Allerdings ist aufgrund der galvanischen Trennung mit einem Ferrit die Schaltung zur Spannungsstabilisierung in der Bandbreite begrenzt. Darüber hinaus existiert eine hohe Systembelastung durch die Strommessung und den dadurch erhöhten Leistungsverbrauch. Dies kann lediglich durch einen unverhältnismäßig hohen Schaltungsaufwand behoben werden. Wird dies nicht gemacht, dann existiert ein leichter, zeitlicher Versatz bei der Messfrequenz. Eine solche Schaltung zur Spannungsstabilisierung ist daher lediglich für relativ geringe Frequenzen im Bereich bis 125 KHz geeignet.

Vielfach ist es jedoch erforderlich, auch Störpegel mit höheren Frequenzen auszuregeln. Besonders gravierend machen sich solche höherfrequenten Störfrequenzen bemerkbar, wenn sie sich im Frequenzband der Radiofrequenzen, d. h. im Bereich von etwa 1 MHz und darüber, befinden, da dadurch der Radioempfang mit einem störenden Rauschen überlagert ist, was insbesondere bei Automotive-Anwendungen verständlicherweise vermieden werden sollte.

Der vorliegenden Erfindung liegt daher die Aufgabe zugrunde, eine Schaltung zur Spannungsstabilisierung bereitzustellen, die ein mit einem Störpegel überlagertes Ausgangssignal auf einer Ausgangsleitung möglichst rückwirkungsfrei stabilisiert.

Erfindungsgemäß wird diese Aufgabe durch eine Schaltungsanordnung zur Spannungsstabilisierung mit den Merkmalen des Patentanspruchs 1 gelöst.

Demgemäss ist eine Schaltungsanordnung zur Spannungsstabilisierung vorgesehen, die zwischen zwei Signalleitungen mit jeweils einem Signal angeordnet ist, wobei mindestens einem Signal ein Störsignal überlagert ist, mit einer Verstärkerschaltung, die ein vom Störsignal abgeleitetes Signal als Differenz zu einem Referenzsignal erfasst, verstärkt und daraus ein gegenphasiges Signal erzeugt, mit einer der Verstärkerschaltung nachgeschalteten, Anpassschaltung zur Potentialanpassung, die aus dem gegenphasigen Signal ein Kompensationssignal erzeugt, welches dem mit dem Störpotential überlagerten Signal überlagert wird.

Die erfindungsgemäße Schaltung zur Spannungsstabilisierung ermöglicht mit Hilfe einer aktiven Kompensationsschaltung, die einen Störpegel als Differenz zu einem frei einstellbaren Referenzsignal erfasst, mit einem Differenzverstärker verstärkt und gegenphasig auf die mit dem Störpegel überlagerten Anschlussleitungen in Form eines Kompensationsstromes oder einer Kompensationsspannung einspeist, eine dynamische und rückwirkungsfreie Kompensation des Störpegels. Die Schaltung zur Spannungsstabilisierung greift hier lediglich das Störsignal bzw. das Signal auf der störungsbehafteten Anschlussleitung ab und überlagert die störungsbehaftete Anschlussleitung mit einem Kompensationssignal. Ansonsten bleibt aber der Laststromkreis durch die Stabilisierungsschaltung unberührt. Die erfindungsgemäße Schaltung zur Spannungsstabilisierung weist vorteilhafterweise keine Bauteile im-Signalpfad der störungsbehafteten Anschlussleitung auf, was auch keine durch die Stabilisierungsschaltung hervorgerufene Rückwirkung auf diese Anschlussleitung zur Folge hat. Die Dynamik und der Frequenzbereich der Stabilisierungsschaltung, in dem die erfindungsgemäße Schaltung optimal arbeitet, kann durch geeignete Dimensionierung dieser Stabilisierungsschaltung - also des Differenzverstärkers, der Anpassschaltung, des Messkreises, der Technologie, der Transitfrequenz, der Versorgungsspannung - erzielt werden.

Vorteilhafte Ausgestaltungen und Weiterbildungen des Erfindungsgedankens sind den Unteransprüchen und der Beschreibung unter Bezugnahme auf die Zeichnung entnehmbar.

Die Erfindung wird nachfolgend anhand der in den Figuren der Zeichnung angegebenen Ausführungsbeispiele näher erläutert. Es zeigt dabei:
- Figur 1: in einem Blockschaltbild das Prinzip der erfindungsgemäßen Schaltung zur Spannungsstabilisierung;
- Figur 2: in einem Schaltbild ein erstes, allgemeines Ausführungsbeispiel der erfindungsgemäßen Schaltung zur Spannungsstabilisierung;
- Figur 3: in einem Schaltbild ein zweites Ausführungsbeispiel der Schaltung zur Spannungsstabilisierung;
- Figur 4: ein drittes Ausführungsbeispiel der Schaltung zur Spannungsstabilisierung.

In allen Figuren der Zeichnung sind gleiche bzw. funktionsgleiche Elemente und Signale - sofern nichts anderes gesagt ist - mit gleichen Bezugszeichen versehen.

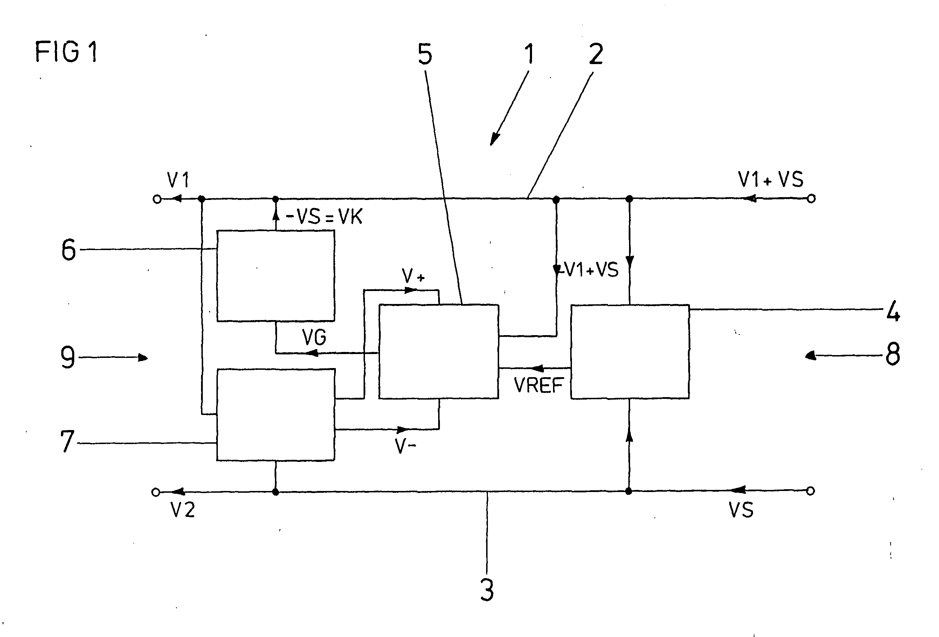

Figur 1 zeigt zunächst ein Blockschaltbild der erfindungsgemäßen Schaltung zur Spannungsstabilisierung.

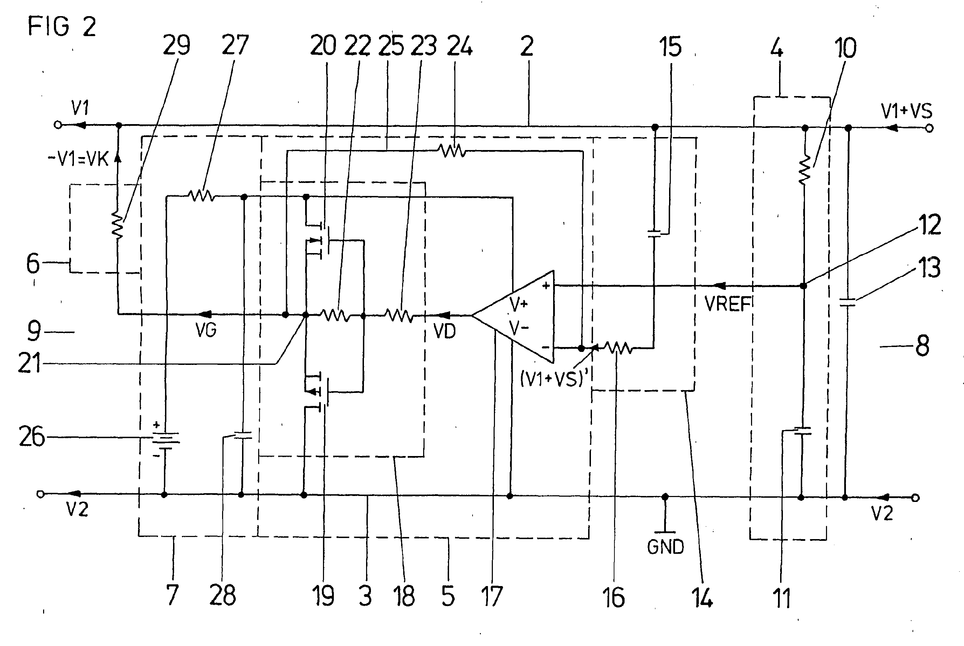

In Figur 1 ist mit 1 die Schaltung zur Spannungsstabilisierung bezeichnet. Die Spannungsstabilisierungsschaltung 1 ist zwischen zwei Signalleitungen 2, 3 angeordnet. Die beiden Signalleitungen 2, 3 bilden hier den Leistungspfad einer in den Figuren nicht dargestellten elektronischen Schaltung, wobei die erste Signalleitung 2 ein erstes Signal V1 und die zweite Signalleitung 3 ein zweites Signal V2 aufweist. Bei den Signalen V1, V2 kann es sich sowohl um ein Stromsignal oder auch um ein Spannungssignal handeln. Gleichermaßen kann es sich bei den Signalen V1, V2 um ein Gleichsignal, ein Wechselsignal oder ein mit einem Gleichsignal überlagertes Wechselsignal handeln. Als Signalleitung 2, 3 ist nicht notwendigerweise eine Leitung zu verstehen, vielmehr kann darunter auch eine Massefläche (siehe hierzu auch Figur 2) oder eine Potentialfläche verstanden werden.

Häufig ist mindestens eine der beide Signalleitungen 2, 3 mit einem unerwünschten Störsignal VS beaufschlagt, welches über die Schaltung zur Spannungsstabilisierung 1 eliminiert werden soll. Nachfolgend sei angenommen, dass lediglich die Signalleitung 2 mit einem Störpegel VS beaufschlagt ist. Diese Signalleitung 2 wird nachfolgend auch als störungsbehaftete Leitung bezeichnet. Das auf dieser Signalleitung 2 verlaufende Signal, welches sich aus der Überlagerung des Signals V1 mit dem Störpegel VS ergibt, wird dann als störungsbehaftetes Signal V1+VS bezeichnet.

Die erfindungsgemäße Schaltung 1 weist zum Zwecke der Spannungsstabilisierung eine Referenzschaltung 4, eine Verstärkerschaltung 5 und eine Anpassschaltung 6 auf. Die Referenzschaltung 4 ist am Eingang 8 zwischen den Signalleitungen 2, 3 geschaltet und erzeugt aus den Signalen V1, V2 ausgangsseitig ein Referenzsignal VREF. Die Referenzschaltung 4 muss jedoch nicht notwendigerweise zwischen den Signalleitungen 2, 3 angeordnet sein, sondern kann vielmehr das Referenzsignal VREF auf beliebig andere Weise erzeugen.

Die Verstärkerschaltung 5 ist ebenfalls mit der störungsbehafteten Signalleitung 2 sowie mit dem Ausgang der Referenzschaltung 4 verbunden. Der Verstärkerschaltung 5 wird somit das störungsbehaftete Signal V1+VS (oder ein davon abgeleitetes Signal) sowie das Referenzsignal VREF zugeführt. Die Verstärkerschaltung 5 ist ferner mit einer ebenfalls zwischen den Signalleitungen 2, 3 geschalteten Spannungsversorgung 7 verbunden, die die Verstärkerschaltung 5 mit Versorgungspotentialen V+, V- versorgt. Die Verstärkerschaltung 5 erzeugt ausgangsseitig ein zu dem Störsignal VS gegenphasiges Signal VG, welches der nachgeschalteten Anpassschaltung 6 zugeführt wird. Die Anpassschaltung 6 ist ausgangsseitig mit der störungsbehafteten Signalleitung 2 verbunden. Die Anpassschaltung 6 erzeugt aus dem gegenphasigen Signal VG ein Kompensationssignal VK ≈ -VS, welches bezogen auf seine Amplitude im wesentlichen dem Störsignal VS entspricht, jedoch ein umgekehrtes Vorzeichen aufweist. Durch die Überlagerung des Kompensationssignals VK mit dem störungsbehafteten Signal V1+VS ergibt sich am Ausgang 9 ein nunmehr nicht mehr störungsbehaftetes Signal V1 auf der ersten Signalleitung 2, welches der elektronischen Schaltung zuführbar ist.

Die Prinzipschaltung entsprechend Figur 1 besteht somit aus einem Messkreis zur selektiven Einstellung der zu kompensierenden Frequenz bzw. des zu kompensierenden Frequenzbereiches, einem Differenzverstärker und eventuell einem diesen nachgeschalteten Verstärker aus z. B. Bipolar- oder MOS-Transistoren, einer Spannungsversorgung und einer Anpassschaltung. Unter einer Anpassschaltung ist eine Schaltung zur Potential- und/oder Impedanzanpassung zu verstehen. Durch die Anordnung dieser Schaltungselemente lässt sich erfindungsgemäß ein selektiver HF-Filter zusammen mit einem hochdynamischen Spannungsstabilisator bzw. Spannungsregler realisieren, der vorteilhafter Weise nicht direkt im Leistungsstrompfad, d. h. in den Signalleitungen 2, 3, angeordnet ist. Auf diese Weise ist eine weitestgehend rückwirkungsfreie Spannungsstabilisierung bzw. Spannungsregelung möglich.

In Figur 1 ist die Spannungsversorgung 7 zwischen den Signalleitungen 2, 3 geschaltet. Jedoch können die für die Versorgung der Verstärkerschaltung 5 erforderlichen Versorgungspotentiale V+, V- auch auf beliebig andere Art und Weise, wie nachstehend noch anhand der Figuren 2 bis 4 erläutert wird, erzeugt werden. Insbesondere könnte die Spannungsversorgung 7 auch vollständig von den Signalleitungen 2, 3 entkoppelt sein und als lokale Energieversorgungseinrichtung ausgebildet sein.

Anhand der Figuren 2 bis 4 werden nachfolgend drei Ausführungsbeispiele für die Realisierung einer Schaltungsanordnung zur Spannungsstabilisierung beschrieben.

Im Beispiel in Figur 2 sei angenommen, dass das über der ersten Signalleitung 2 zu übertragende Signal ein Spannungspotential von 12 Volt ist. Die zweite Signalleitung 3 weist demgegenüber das Potential der Bezugsmasse GND bzw. 0 Volt auf.

In Figur 2 besteht die Referenzschaltung 4 aus einer Reihenschaltung eines Widerstandes 10 und eines Kondensators 11, die zwischen den Signalleitungen 2, 3 geschaltet sind und an deren Mittelabgriff 12 das Referenzsignal VREF abgreifbar ist. Die Referenzschaltung 4 bildet somit einen Tiefpass. Parallel zur Reihenschaltung aus Widerstand 10 und Kondensator 11 ist ein weiterer Kondensator 13 zwischen den Signalleitungen 2, 3 geschaltet. Dieser Kondensator 13 ist zwar für das Prinzip der erfindungsgemäßen Spannungsstabilisierung nicht relevant, jedoch ist das Vorsehen eines Kondensators 13 am Eingang 8 der Spannungsstabilisierungsschaltung 1 von Vorteil, da dadurch kleinere Potentialspitzen auf den Signalleitungen 2, 3 bereits vor der Stabilisierung herausgefiltert werden können. Zwischen der ersten Signalleitung 2 und der Verstärkerschaltung 5 ist ferner ein Hochpass 14 bestehend aus einem Kondensator 15 und Widerstand 16 geschaltet. Der Hochpass 14 erzeugt ein von dem störungsbehafteten Signal V1+VS abgeleitetes Signal (V1+VS)'.

Die Verstärkerschaltung 5 weist einen Differenzverstärker 17 und einen dem Differenzverstärker 17 nachgeschalteten Treiber 18 auf. Dem positiven Eingang (+) des Differenzverstärkers 17 wird das Referenzsignal VREF und dem negativen Eingang (-) das Signal (V1+V2)' zugeführt. Der Differenzverstärker 17 erzeugt ausgehend davon ein Differenzsignal VD, welches dem nachgeschalteten Treiber 18 zugeführt wird. Soll das Differenzsignal des Differenzverstärkers 17 zusätzlich noch verstärkt werden, kann der Treiber 18 auch als Verstärker ausgebildet sein. Der Treiber 18 ist im vorliegenden Beispiel als einstufiger Gegentaktausgangsstufe ausgebildet und weist jeweils einen n-Kanal- und p-Kanal-Transistor, deren Laststrecken (zwischen den beiden Lastausgängen) zueinander in Reihe geschaltet sind und deren Steueranschlüsse mit dem Ausgang - des Differenzverstärkers 17 verbunden sind, auf. Zwischen dem Ausgang des Differenzverstärkers 17 und den Steueranschlüssen der Transistoren 19, 20 sowie zwischen den Steueranschlüssen und dem Mittelabgriff 21 ist jeweils ein Widerstand 22, 23 vorgesehen, um Übernahmeverzerrungen der Treiberstufe 18 zu verringern. Dadurch kann ein schnelleres Ansprechen und somit eine höhere Dynamik der gesamten Spannungsstabilisierungsschaltung erreicht werden. Die Transistoren 19, 20 der Treiberstufe 18 arbeiten also vorteilhafterweise im analogen Bereich der Strom-Spannungs-Kennlinie, um dadurch der Dynamik des störungsbehafteten Signals V1+VS besser folgen zu können.

Im vorliegenden Ausführungsbeispiel ist die Treiberstufe 18 mit MOSFET-Transistoren ausgestattet. Für die Ansteuerung der MOSFETs 19, 20 der Treiberstufe 18 ist eine in Figur 2 nicht dargestellte, relativ komplizierte Ansteuerschaltung zur Bereitstellung einer Vorspannung bzw. für eine Temperaturkompensation erforderlich. Es können alternativ auch eine bipolar ausgebildete Treiberstufe 18 verwendet werden, da diese eine direktere Steuerung des Stromflusses ermöglicht.

Am Ausgang 21 der Treiberschaltung 18, d. h. an dem Mittelabgriff 21 der Laststrecken, ist das gegenphasige Signal VG abgreifbar. Ferner ist ein Rückkopplungszweig 25, in dem ein Widerstand 24 angeordnet ist, vorgesehen, über den das ausgangsseitig von der Treiberstufe 18 bereitgestellte gegenphasige Signal VG als Regelsignal in den negativen Eingang (-) des Differenzverstärkers 17 zurückgekoppelt wird.

Der in Figur 2 dargestellte Treiber arbeitet in einem Bereich von größer 100 mA. Zum Treiben von kleineren Signalen wird jedoch typischerweise nur ein Operationsverstärker verwendet, der auch Stromsignale im mA-Bereich treiben kann. Die Funktionalität der Treiberstufe 18 und des Differenzverstärkers 17 wäre dann in einem geeignet ausgelegten Operationsverstärker integriert.

Die Spannungsversorgung 7 weist eine Spannungsquelle 26 mit Innenwiderstand 27, denen ein Kondensator 28 parallel geschaltet ist, auf. Die lediglich mit der zweiten Signalleitung 3 verbundene Spannungsversorgung 7 erzeugt an ihrem Ausgang eine Versorgungsspannung von beispielsweise 24 Volt, so dass die beiden Versorgungsspannungseingänge des Differenzverstärkers 17 und des Treibers 18 mit den Versorgungspotentialen V- = 0 Volt und V+ = 24 Volt versorgt werden.

Die Anpassschaltung 6 ist im Beispiel in Figur 2 lediglich durch einen Widerstand 29 realisiert, dem das gegenphasige Signal VG zugeführt wird und der daraus das kompensierte Ausgangssignal VK erzeugt. Der Widerstand 29 dient der Signalanpassung und der Stabilität des Regelkreises und somit der gesamten Schaltung zur Spannungsstabilisierung 1. Die durch den Widerstand 29 hervorgerufenen Verluste werden dabei bewusst in Kauf genommen, damit der Regelkreis nicht schwingt und dadurch instabil werden würde.

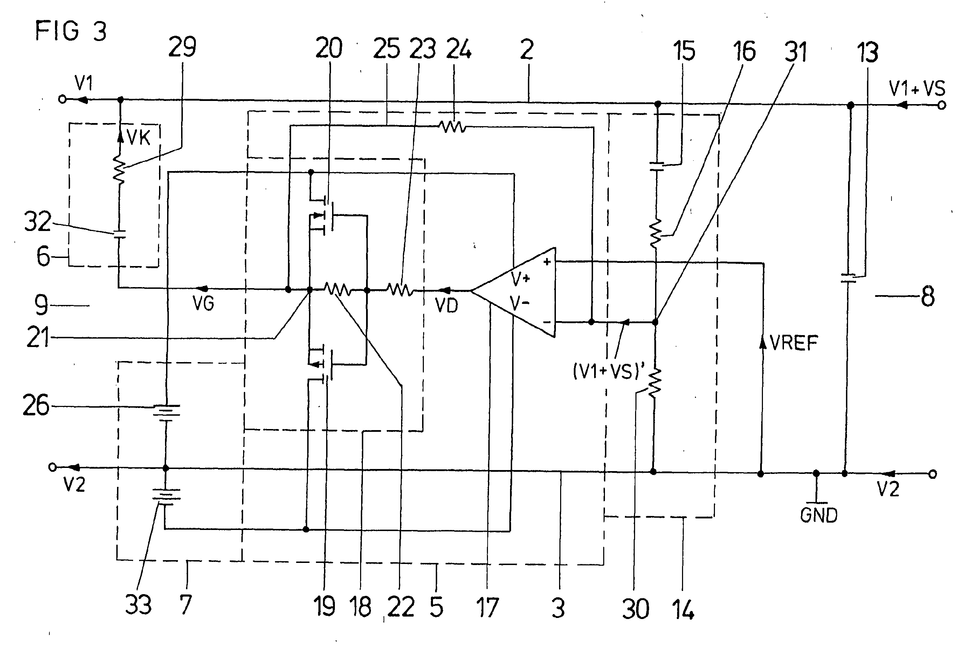

Figur 3 zeigt eine erfindungsgemäße Schaltung 1 mit bezogen auf ein Referenzpotential symmetrisch angeordneten Spannungsquellen.

Der wesentliche Unterschied der Schaltung zur Spannungsstabilisierung 1 entsprechend Figur 3 gegenüber der in Figur 2 besteht in der symmetrischen Auslegung der Spannungsversorgung 7. Die Spannungsversorgung 7 weist hier zwei Spannungsquellen 26, 33 auf, die symmetrisch bezüglich eines Referenzpotentials angeordnet sind. Als Referenzpotential wird hier das Bezugspotential GND auf der zweiten Signalleitung 3, welches 0 Volt beträgt, gewählt. Der Treiber 18 und der Differenzverstärker 17 werden damit jeweils mit zwei betragsmäßig gleichen, jedoch mit unterschiedlichen Vorzeichen versehenen Versorgungspotentialen V+, V-, beispielsweise ±12 Volt, versorgt. Über die symmetrische Auslegung der Spannungsversorgung 7 mittels zweier Spannungsquellen 26, 33 kann die erfindungsgemäße Schaltung zur Spannungsstabilisierung 1 zwischen zwei beliebigen Signalleitungen 2, 3 angeordnet werden, was eine höhere Flexibilität bedeutet. Insbesondere müssen damit die Signalleitungen 2, 3 nicht notwendigerweise ein gleichgerichtetes Signal V1, V2 aufweisen, sondern es könnte vielmehr auch eine Netzwechselspannung über die Signalleitungen 2, 3 übertragen werden.

Ferner ist im Unterschied zu Figur 2 der Hochpass 14 in Figur 3 geringfügig anders ausgestaltet und weist hier neben dem Kondensator 15 und dem Widerstand 16 noch einen zweiten Widerstand 30 auf, wobei am Mittelabgriff 31 zwischen den beiden Widerständen 16, 30 das aus dem störungsbehafteten Signal V1+VS abgeleitete Signal (V1+VS) abgreifbar ist.

Das in den positiven Eingang des Differenzverstärker 17 eingekoppelte Referenzsignal VREF wir hier direkt aus dem Referenzsignal GND der zweiten Signalleitung 3 gewonnen. Ein eigens dafür vorgesehener Tiefpass, wie in Figur 2, ist hier somit nicht erforderlich.

Ferner ist die Anpassschaltung 6 so weitergebildet, dass dem Widerstand 29 ein Entkopplungskondensator 32 vorgeschaltet ist, der Gleichanteile und gegebenenfalls die Grundfrequenzen der Netzsignale der zu kompensierenden Leitung von der Kompensationsschaltung aus dem gegenphasigen Signal VG entkoppelt und somit eine quasi-Potentialfreiheit für die ganze Schaltung zur Spannungsstabilisierung 6 gewährleistet. Über eine geeignete Dimensionierung des Entkopplungskondensators 32 kann die Dynamik und damit die Anstiegsflanke des ausgangsseitig erzeugten Kompensationsstroms VK nicht beeinflusst.

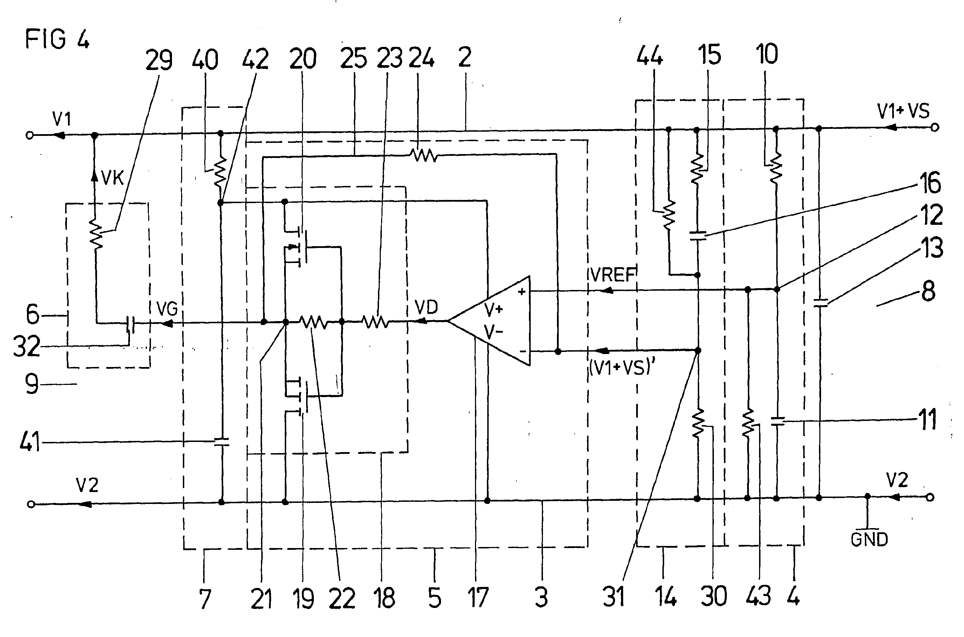

Figur 4 zeigt eine weitere Ausgestaltung der erfindungsgemäßen Schaltung zur Spannungsstabilisierung 1, bei der die Spannungsversorgung 7 keine zusätzliche Spannungsquelle aufweist. Im Gegensatz zu den Ausführungsbeispielen der Figuren 2 und 3 wird für die Energieversorgung der Treiberstufe 18 und des Differenzverstärkers 17 eine Stromquelle verwendet. Im einfachsten Fall enthält die Stromquelle - wie dies in Figur 4 dargestellt ist - einen Widerstand 40, der in Reihe zu einem Kondensator 41 geschaltet ist, wobei diese Reihenschaltung zwischen den Signalleitungen 2, 3 angeordnet ist. Am Mittelabgriff 42 ist somit ein positives Versorgungspotential V+ zur Energieversorgung des Treibers 18 und Differenzverstärkers 17 abgreifbar. Das negative Versorgungspotential Verhält der Treiber 18 und Differenzverstärker 17 von der zweiten Signalleitung 3, die auf dem Potential der Bezugsmasse GND liegt. Die Stromquelle 40, die in Figur 4 stark vereinfacht dargestellt ist und als Widerstand ausgebildet ist, ließe sich selbstverständlich auch durch einen gesteuerten MOSFET ersetzen. Allgemein könnte hier eine wie auch immer ausgebildete Stromquelle verwendet werden.

Als Spannungsversorgung 7 könnte statt einer Spannungsquelle oder einer Stromquelle auch ein kompensiertes Schaltnetzteil, Ladungspumpe oder dergleichen zum Einsatz kommen.

Darüber hinaus ist im Unterschied zu Figur 2 sowohl der Tiefpass der Referenzschaltung 4 wie auch der Hochpass 14 mehrstufig ausgebildet. Der Tiefpass weist neben der Reihenschaltung des Widerstandes 10 und des Kondensators 11 einen zusätzlichen Widerstand 43 auf, der dem Kondensator 11 parallel geschaltet ist. Durch den dadurch bereitgestellten Filter höherer Ordnung weist dieser eine größere Steilheit bei der Grenzfrequenz auf. Im vorliegenden Ausführungsbeispiel wurde lediglich ein zweistufig ausgebildetes Tiefpassfilter dargestellt, jedoch könnte dieses im Rahmen des fachmännischen Handelns und Wissens selbstverständlich in beliebiger Art und Weise erweitert werden und insbesondere auch aus mehr als zwei Stufen bestehen.

Darüber hinaus ist auch das Hochpassfilter 14, das dem negativen Eingang des Differenzverstärkers 17 vorgeschaltet ist, mehrstufig ausgebildet. Neben dem in Reihe geschalteten Widerstand 15, Kondensator 16 und Widerstand 30 ist ein weiterer Widerstand 44 vorgesehen, der der Reihenschaltung aus Widerstand 15 und Kondensator 16 parallel geschaltet ist.

Zusammenfassend kann festgestellt werden, dass mittels der erfindungsgemäßen Schaltungsanordnung zur Spannungsstabilisierung auf sehr einfache, jedoch nichtsdestotrotz sehr effektive Weise eine rückwirkungsfreie und hochdynamische Kompensation von Störsignalen im Leistungsstrompfad einer elektronischen Schaltung bereitgestellt wird, ohne dass die Nachteile von bekannten Schaltungen zur Spannungsstabilisierung, insbesondere die negative Rückkopplung, in Kauf genommen werden muss.

### Bezugszeichenliste

- 1: Schaltung zur Spannungsstabilisierung
- 2, 3: Signalleitungen
- 4: Referenzschaltung
- 5: Verstärkerschaltung
- 6: Anpassschaltung, Schaltung zur Impedanzanpassung
- 7: Spannungs-/Stromversorgung
- 8: Eingang
- 9: Ausgang
- 10: Widerstand
- 11: Kondensator
- 12: Mittelabgriff
- 13: Kondensator
- 14: Hochpass(filter)
- 15: Kondensator
- 16: Widerstand
- 17: Differenzverstärker
- 18: Treiber, Treiberstufe
- 19, 20: MOSFETs
- 21: Mittelabgriff
- 22, 23, 24: Widerstände
- 25: Rückkopplungszweig
- 26: Spannungsquelle
- 27: Innenwiderstand
- 28: Kondensator
- 29, 30: Widerstände
- 31: Mittelabgriff
- 32: Entkopplungskondensator
- 33: Spannungsquelle
- 40: Widerstand
- 41: Kondensator
- 42: Mittelabgriff
- 43, 44: Widerstände

- GND: Potential der Bezugsmasse
- V+, V-: Versorgungspotentiale
- V1, V2: Signale
- V1+VS: störungsbehaftetes Signal
- (V1+VS)': vom störungsbehafteten Signal abgeleitetes Signal
- VD: Differenzsignal
- VG: gegenphasiges Signal
- VK: Kompensationssignal
- VREF: Referenzsignal
- VS: Störsignal, Störpegel

## Patentansprüche

1. Schaltungsanordnung zur Spannungsstabilisierung (1),
die zwischen zwei Signalleitungen (2, 3) mit jeweils einem Signal (V1, V2) angeordnet ist, wobei mindestens einem Signal (V1) ein Störsignal (VS) überlagert ist,
mit einer Verstärkerschaltung (5), die ein vom Störsignal (VS) abgeleitetes Signal ((V1+VS)') als Differenz zu einem Referenzsignal (VREF) erfasst, verstärkt und daraus ein gegenphasiges Signal (VG) erzeugt,
mit einer der Verstärkerschaltung (5) nachgeschalteten, aktiven Anpassschaltung (6) zur Potentialanpassung, die aus dem gegenphasigen Signal (VG) ein Kompensationssignal (VK) erzeugt, welches dem mit dem Störpotential (VS) überlagerten Signal (V1) überlagert wird,
**dadurch gekennzeichnet,**
**dass** eine Referenzschaltung (4) zur Erzeugung eines stabilisierten Referenzsignals (VREF) vorgesehen ist, die der Verstärkerschaltung (5) vorgeschaltet ist und die als Tiefpassfilter ausgebildet ist, das zwischen die Signalleitungen (2, 3) geschaltet ist, und an deren Mittelabgriff (12), der mit einem ersten Eingang der Verstärkerschaltung (5) verbunden ist, das Referenzsignal (VREF) abgreifbar ist, wobei das Tiefpassfilter als mehrstufiges Filter bzw. als Filter höherer Ordnung ausgebildet ist.

2. Schaltungsanordnung nach Anspruch 1,
**dadurch gekennzeichnet,**
**dass** ein Hochpassfilter (14) vorgesehen ist, das zumindest mit der mit dem Störsignal (VS) beaufschlagten Signalleitung (2) gekoppelt ist und welches das von dem Störsignal (VS) abgeleitete Signal ((V1+VS)') bereitstellt.

3. Schaltungsanordnung nach einem der vorstehenden Ansprüche,
**dadurch gekennzeichnet,**
**dass** ein Kondensator (13) vorgesehen ist, der an einem Eingang (8) der Schaltung zur Spannungsstabilisierung (1) zwischen den beiden Signalleitungen (2, 3) angeordnet ist und der dazu ausgelegt ist, Potentialspitzen der Signale (V1, V2) herauszufiltern.

4. Schaltungsanordnung nach einem der vorstehenden Ansprüche,
**dadurch gekennzeichnet,**
**dass** die Verstärkerschaltung (5) einen Differenzverstärker (17) und einen dem Differenzverstärker (17) nachgeschalteten Treiber (18) aufweist.

5. Schaltungsanordnung nach Anspruch 4,
**dadurch gekennzeichnet,**
**dass** der Treiber (18) ein bipolar ausgebildeter oder ein in MOS-Technologie ausgebildeter Gegentakttreiber ist.

6. Schaltungsanordnung nach einem der Ansprüche 1 bis 3,
**dadurch gekennzeichnet,**
**dass** die Verstärkerschaltung (5) einen Operationsverstärker, in dem die Funktionalität eines Differenzverstärkers und eines Treibers integriert ist, aufweist.

7. Schaltungsanordnung nach einem der vorstehenden Ansprüche,
**dadurch gekennzeichnet,**
**dass** ein Rückkopplungszweig (25) vorgesehen ist, der das gegenphasige Signal (VG) am Ausgang (21) der Verstärkerschaltung (5) als Regelgröße in einen zweiten Eingang der Verstärkerschaltung (5) rückkoppelt.

8. Schaltungsanordnung nach einem der vorstehenden Ansprüche,
**dadurch gekennzeichnet,**
**dass** die Anpassschaltung (6) einen Widerstand (29), dem ein Entkopplungskondensator (32) vorgeschaltet ist, aufweist, wobei der Widerstand (29) so dimensioniert ist, dass er aus dem gegenphasigen Signal (VG) der Verstärkerschaltung (5) ein Kompensationssignal (VK) erzeugt, welches betragsmäßig dem Störsignal (VS) entspricht, jedoch ein umgekehrtes Vorzeichen aufweist.

9. Schaltungsanordnung nach einem der vorstehenden Ansprüche,
**dadurch gekennzeichnet,**
**dass** eine Spannungsversorgung (7) vorgesehen ist, die die Verstärkerschaltung (5), insbesondere einen in der Verstärkerschaltung (5) vorgesehenen Differenzverstärker (17) und Treiber (18), mit einer Versorgungsspannung (V+, V-) versorgt.

10. Schaltungsanordnung nach Anspruch 9,
**dadurch gekennzeichnet,**
**dass** als Spannungsversorgung (7) eine Spannungsquelle (26) mit Innenwiderstand (27) vorgesehen ist.

11. Schaltungsanordnung nach einem der Ansprüche 9 oder 10,
**dadurch gekennzeichnet,**
**dass** die Spannungsversorgung (7) zumindest zwei, bezogen auf ein Referenzpotential (GND), symmetrische Spannungsquellen (26, 33) aufweist, die die Verstärkerschaltung (5) mit betragsmäßig gleichen, jedoch mit unterschiedlichen Vorzeichen versehenen Versorgungspotentialen (V+, V-) versorgt.

12. Schaltungsanordnung nach einem der Ansprüche 9 bis 11,
**dadurch gekennzeichnet,**
**dass** als Spannungsversorgung (7) eine zwischen den Signalleitungen (2, 3) angeordnete. Stromquelle (40) vorgesehen ist, an deren Ausgang (42) mindestens ein Versorgungspotential (V+) zur Versorgung der Verstärkerschaltung (5) vorgesehen ist.

13. Schaltungsanordnung nach einem der Ansprüche 9 bis 12,
**dadurch gekennzeichnet,**
**dass** als Spannungsversorgung (7) ein kompensiertes Schaltnetzteil oder eine Ladungspumpe vorgesehen ist.

## Claims

1. Circuit arrangement for voltage stabilization (1),
which is arranged between two signal lines (2, 3) with a respective signal (V1, V2), an interference signal (VS) being superposed on at least one signal (V1),
having an amplifier circuit (5), which detects a signal ((V1+VS)') derived from the interference signal (VS) as a difference with respect to a reference signal (VREF), amplifies it and generates an in-antiphase signal (VG) from this, having an active matching circuit (6) for potential matching connected downstream of the amplifier circuit (5), which matching circuit generates a compensation signal (VK) from the in-antiphase signal (VG), said compensation signal being superposed on the signal (V1) on which the interference potential (VS) is superposed,
**characterized**
**in that** a reference circuit (4) for generating a stabilized reference signal (VREF) is provided, which is connected upstream of the amplifier circuit (5) and which is designed as a low-pass filter connected between the signal lines (2, 3) and at whose centre tap (12), which is connected to a first input of the amplifier circuit (5), the reference signal (VREF) can be tapped off, the low-pass filter being designed as a multistage filter or as a higher-order filter.

2. Circuit arrangement according to Claim 1,
**characterized**
**in that** a high-pass filter (14) is provided, which is coupled at least to the signal line (2) to which the interference signal (VS) is applied, and which provides the signal ((V1+VS)') derived from the interference signal (VS).

3. Circuit arrangement according to one of the preceding claims,
**characterized**
**in that** a capacitor (13) is provided, which is arranged at an input (8) of the circuit for voltage stabilization (1) between the two signal lines (2, 3) and which is designed to filter out potential spikes of the signals (V1, V2).

4. Circuit arrangement according to one of the preceding claims,
**characterized**
**in that** the amplifier circuit (5) has a differential amplifier (17) and a driver (18) connected downstream of the differential amplifier (17).

5. Circuit arrangement according to Claim 4,
**characterized**
**in that** the driver (18) is a push-pull driver of bipolar design or a push-pull driver designed using MOS technology.

6. Circuit arrangement according to one of Claims 1 to 3,
**characterized**
**in that** the amplifier circuit (5) has an operational amplifier in which the functionality of a differential amplifier and of a driver is integrated.

7. Circuit arrangement according to one of the preceding claims,
**characterized**
**in that** a feedback path (25) is provided, which feeds the in-antiphase signal (VG) at the output (21) of the amplifier circuit (5) as controlled variable back into a second input of the amplifier circuit (5).

8. Circuit arrangement according to one of the preceding claims,
**characterized**
**in that** the matching circuit (6) has a resistor (29), upstream of which is connected a decoupling capacitor (32), the resistor (29) being dimensioned in such a way that it generates a compensation signal (VK) from the in-antiphase signal (VG) of the amplifier circuit (5), said compensation signal corresponding to the interference signal (VS) in terms of magnitude but having an opposite sign.

9. Circuit arrangement according to one of the preceding claims,
**characterized**
**in that** a voltage supply (7) is provided, which supplies the amplifier circuit (5), in particular a differential amplifier (17) and driver (18) provided in the amplifier circuit (5), with a supply voltage (V+, V-).

10. Circuit arrangement according to Claim 9,
**characterized**
**in that** a voltage source (26) with internal resistor (27) is provided as voltage supply (7).

11. Circuit arrangement according to either of Claims 9 and 10,
**characterized**
**in that** the voltage supply (7) has at least two voltage sources (26, 33), which are symmetrical relative to a reference potential (GND) and which supply the amplifier circuit (5) with supply potentials (V+, V-) that are identical in terms of magnitude but are provided with different signs.

12. Circuit arrangement according to one of Claims 9 to 11,
**characterized**
**in that** a current source (40) arranged between the signal lines (2, 3) is provided as voltage supply (7), at least one supply potential (V+) for supplying the amplifier circuit (5) being provided at the output (42) of said current source.

13. Circuit arrangement according to one of Claims 9 to 12,
**characterized**
**in that** a compensated switched-mode power supply or a charge pump is provided as voltage supply (7).

## Revendications

1. Circuit de stabilisation de tension (1),
disposé entre deux lignes de signaux (2, 3) ayant chacune un signal (V1, V2), ave un signal perturbateur (VS) superposé à au moins un signal (V1),
comprenant un circuit d'amplification (5) qui enregistre un signal ((V1+VS)') dérivé du signal perturbateur (VS) en tant que différence par rapport à un signal de référence (VREF), l'amplifie et génère à partir de là un signal en opposition de phase (VG), et
un circuit d'adaptation actif (6), connecté en aval du circuit d'amplification (5), pour l'adaptation du potentiel, et qui génère à partir du signal en opposition de phase (VG), un signal de compensation (VK) superposé au signal (V1) auquel se superpose le potentiel perturbateur (VS),
**caractérisé en ce qu'**
on prévoit un circuit de référence (4) pour générer un signal de référence stabilisé (VREF), connecté en amont du circuit d'amplification (5) et configuré sous forme de filtre passe-bas connecté entre les lignes de signaux (2, 3), et dont la prise médiane (12), reliée à une première entrée du circuit d'amplification (5), peut comporter le signal de référence (VREF), sachant que le filtre passe-bas est configuré sous forme de filtre à plusieurs étages ou sous forme de filtre d'ordre supérieur.

2. Circuit selon la revendication 1,
**caractérisé en ce qu'**
un filtre passe-haut (14) couplé au moins à la ligne de signaux (2) sollicitée par le signal perturbateur (VS), met à disposition le signal ((V1+VS)') dérivé du signal perturbateur (VS).

3. Circuit selon l'une des revendications précédentes,
**caractérisé en ce qu'**
un condensateur (13) disposé au niveau d'une entrée (8) du circuit de stabilisation de tension (1) entre les deux lignes de signaux (2, 3) est conçu de manière à filtrer les pointes de potentiel des signaux (V1, V2).

4. Circuit selon l'une des revendications précédentes,
**caractérisé en ce que**
le circuit d'amplification (5) présente un amplificateur différentiel (17) et un pilote (18) connecté en aval de l'amplificateur différentiel (17).

5. Circuit selon la revendication 4,
**caractérisé en ce que**
le pilote (18) est un pilote symétrique configuré sous forme bipolaire ou configuré selon la technologie MOS.

6. Circuit selon l'une des revendications 1 à 3,
**caractérisé en ce que**
le circuit d'amplification (5) présente un amplificateur opérationnel intégrant la fonctionnalité d'un amplificateur différentiel et d'un pilote.

7. Circuit selon l'une des revendications précédentes,
**caractérisé en ce qu'**
une branche de rétro-couplage (25) réalise le rétro-couplage du signal en opposition de phase (VG) au niveau de la sortie (21) du circuit d'amplification (5), en tant que grandeur de régulation, vers une deuxième entrée du circuit d'amplification (5).

8. Circuit selon l'une des revendications précédentes,
**caractérisé en ce que**
le circuit d'adaptation (6) présente une résistance (29) en amont de laquelle est connecté un condensateur de découplage (32), sachant que la résistance (29) est dimensionnée pour générer, à partir du signal en opposition de phase (VG) du circuit d'amplification (5), un signal de compensation (VK) qui correspond en termes de valeur au signal perturbateur (VS), mais toutefois de signe inverse.

9. Circuit selon l'une des revendications précédentes,
**caractérisé en ce qu'**
une alimentation en tension (7) alimente le circuit d'amplification (5), en particulier un amplificateur différentiel (17) et un pilote (18) prévus dans le circuit d'amplification (5), avec une tension d'alimentation (V+, V-).

10. Circuit selon la revendication 9,
**caractérisé en ce qu'**
on prévoit en tant qu'alimentation en tension (7) une source de tension (26) comportant une résistance intérieure (27).

11. Circuit selon l'une des revendications 9 ou 10,
**caractérisé en ce que**
l'alimentation en tension (7) présente au moins deux sources de tension (26, 33) symétriques par rapport au potentiel de référence (GND), et qui alimentent le circuit d'amplification (5) avec des potentiels d'alimentation (V+, V-) identiques en valeur, mais de signes différents.

12. Circuit selon l'une des revendications 9 à 11,
**caractérisé en ce qu'**
on prévoit en tant que source de tension (7) on prévoit entre les lignes de signaux (2, 3),une source de courant (40) dont la sortie (42) comporte au moins un potentiel d'alimentation (V+) pour l'alimentation du circuit d'amplification (5).

13. Circuit selon l'une des revendications 9 à 12,
**caractérisé en ce qu'**
on prévoit en tant qu'alimentation en tension (7) une partie de circuit combinatoire compensé ou une pompe de charge.
